# EUROPEAN PATENT APPLICATION

(11) **EP 4 667 972 A1**
(43) Date of publication of application: **24.12.2025**
(21) Application number: 23921946.2
(22) Date of filing: 17.02.2023
(51) Int. Cl.: G01S 15/931

(54) **OBSTACLE DETECTION METHOD AND DEVICE FOR ASSISTING VEHICLE IN DRIVING**

(71) Applicant: Robert Bosch GmbH, 70442 Stuttgart (DE)
(72) Inventor: LIU, Shu, Shanghai 200335 (CN); YANG, Hao, Shanghai 200335 (CN); ZHANG, Kaixuan, Shanghai 200335 (CN); CAO, Longxu, Shanghai 200335 (CN); GU, Chenyi, Shanghai 200335 (CN)
(86) International application number: PCT/CN2023/076710
(87) International publication number: WO 2024/168794

(57) **Abstract**

**The** present invention discloses an obstacle detection method for assisting in vehicle driving. **The** method comprises: obtaining ultrasonic echo data captured during vehicle movement; obtaining information associated with echo intersections based on the ultrasonic echo data; providing at least part of the ultrasonic echo data and the information associated with the echo intersections as feature data to a machine learning model to obtain detection information for an obstacle, wherein the machine learning model employs at least one of a classification algorithm or a regression algorithm; and assisting in vehicle driving based on the detection information for the obstacle.

## Description

### Technical Field

Generally, the present invention relates to obstacle detection, and more particularly relates to an obstacle detection method and device for assisting in vehicle driving.

### Background Art

As the technology continues to develop, existing obstacle detection methods and devices suitable for vehicle driving are capable of detecting the presence of obstacles around the vehicle during vehicle driving and providing an alert to a driver to protect the vehicle's driving safety. Such methods and devices are widely used in related applications such as autonomous driving systems, autonomous parking systems, and assisted driving systems.

Obstacle detection is now typically performed using cameras, laser radars, millimeter wave radars, and/or ultrasonic radars. The cameras have a strong visual capability, but imaging are greatly affected by weather, and a distance cannot be directly detected; the laser radars have a high precision, are capable of better identifying the distance, but are susceptible to light or thermal radiation; and the millimeter wave radars have a high anti-jamming capability, but the detection distance and accuracy are limited. Moreover, the cameras and the laser radars are expensive.

With a strong directionality of ultrasonic waves, an ultrasonic radar range-finding method is simple and low in cost, and has significant advantages in short-range measurements, so that the current ultrasonic radars are now widely applied in the fields of autonomous parking and stopping assistance, etc. However, due to the low resolution of data captured by the ultrasonic radars, the prior art only supports simple calculation and ranging functions based on specific rules and cannot be adapted to complex scenarios.

### Summary of Invention

It is desirable to provide an obstacle detection method and device for assisting in vehicle driving, which are capable of having accuracy and robustness in obstacle detection based on data captured by low-cost ultrasonic radars, thereby being capable of adapting to complex roads or parking scenarios to better plan routes and avoid obstacles during vehicle driving.

According to one aspect of the present invention, there is provided an obstacle detection method for assisting in vehicle driving, comprising: obtaining ultrasonic echo data captured during vehicle movement; obtaining information associated with echo intersections based on the ultrasonic echo data; providing at least part of the ultrasonic echo data and the information associated with the echo intersections as feature data to a machine learning model to obtain detection information for an obstacle, wherein the machine learning model employs at least one of a classification algorithm or a regression algorithm; and assisting in vehicle driving based on the detection information for the obstacle.

According to another aspect of the present invention, there is provided a method for training a machine learning model for obstacle detection, comprising: obtaining ultrasonic echo data captured during vehicle movement; obtaining information associated with echo intersections based on the ultrasonic echo data; providing at least part of the ultrasonic echo data and the information associated with the echo intersections as feature data to a machine learning model to obtain detection information for an obstacle, wherein the machine learning model employs at least one of a classification algorithm or a regression algorithm; and calculating a loss function based on a difference between the detection information for the obstacle and actual information for the obstacle.

According to yet another aspect of the present invention, there is provided an obstacle detection system for assisting in vehicle driving, comprising: a memory; and a processor. The processor is coupled to the memory, and configured to cause one or more units to perform the method according to any of the examples of the present invention.

According to still another aspect of the present invention, a computer-readable medium is provided, which stores a computer program comprising instructions that, when executed by a control unit, cause one or more units to perform the method according to any of the various examples of the present invention.

According to still another aspect of the present invention, a vehicle is provided, including one or more units that perform the method according to any of the various examples of the present invention.

### Description of Accompanying Drawings

The various examples of the subject matter to be protected are described by way of typical examples with reference to the accompanying drawings. The same reference numbers are used in different accompanying drawings to denote the same or similar components.
FIG. 1 shows a schematic diagram 100 of a vehicle utilizing an ultrasonic radar to conduct obstacle detection.
FIG. 2 shows a schematic diagram of a system 200 utilizing a machine learning model for obstacle detection according to an example of the present invention.
FIG. 3A shows a schematic diagram 300 of utilizing an ultrasonic radar to capture ultrasonic echo data according to an example of the present invention.
FIG. 3B shows a schematic diagram 301 of utilizing ultrasonic echo data to obtain echo intersections according to an example of the present invention.
FIG. 3C shows a schematic diagram 302 of utilizing ultrasonic echo data to obtain drift angle information for echo intersections according to an example of the present invention.
FIG. 4 shows a two-dimensional diagram 400 according to an example of the present invention.
FIG. 5 shows a flow chart of an obstacle detection method 500 for assisting in vehicle driving according to an example of the present invention.
FIG. 6 shows a block diagram of an apparatus 600 that may be used for obstacle detection according to an example of the present invention.

### Specific Embodiments

In the following description, numerous specific details are set forth to provide a thorough understanding of the examples of the present invention. However, those skilled in the relevant art will recognize that the present invention can be practiced without one or more of the specific details, or by using alternative methods, components, etc., to practice the present invention. In some instances, well-known structures and operations are not shown or described in detail to avoid unnecessarily obscuring the present invention.

It should be understood that the term "vehicles" or other similar terms used herein include general motor vehicles, such as passenger cars (including sport utility vehicles, buses, trucks, etc.), various commercial vehicles, etc., and include hybrid vehicles, electric vehicles, etc. In addition, while in most examples described below, an ultrasonic radar or sensor is shown as being mounted on a vehicle, it should be appreciated by those skilled in the art that the ultrasonic radar or sensor can be mounted in any suitable location, including, but not limited to, at a roadside unit, a parking lot infrastructure, etc.

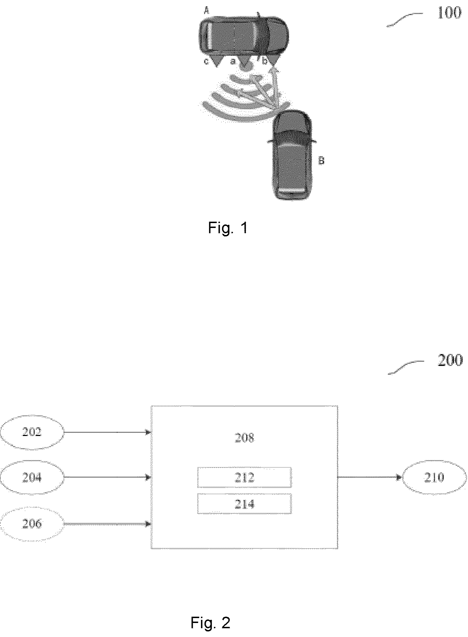

An ultrasonic radar is a radar sensor device that uses ultrasonic waves to measure distances, which utilizes an ultrasonic emission device to emit ultrasonic waves outward, then utilizes an ultrasonic receiving device to receive echoes reflected by an obstacle, and measures a distance from the obstacle based on a time difference. FIG. 1 shows a schematic diagram 100 of a vehicle utilizing an ultrasonic radar to conduct obstacle detection. As shown in FIG. 1, an ultrasonic radar a loaded to a right side of a vehicle A emits ultrasonic waves outward, and when ultrasonic waves encountering a vehicle B are reflected and the echoes are received by the ultrasonic radar a, the ultrasonic radar a or other processing units of the vehicle A may calculate a distance between the vehicle A and the vehicle B according to a time difference between ultrasonic wave emission and echo receiving. However, except for the distance, more information about the obstacle, such as a location of the obstacle, is not available based on data captured by a single ultrasonic radar.

In general, obstacle detection may be conducted through linkage of a plurality of ultrasonic radars. In one example, echoes of the ultrasonic waves emitted by the ultrasonic radar a may be received by ultrasonic radars b and c on two adjacent sides of the ultrasonic radar a in addition to being received by the ultrasonic radar a, from which a two-dimensional location of the obstacle may be calculated and a shape of the obstacle may be inferred according to rules known to those skilled in the art. In practical applications, the accuracy and robustness of obstacle detection based on ultrasonic wave data are difficult to guarantee, and the existing rules only apply to simple scenarios and cannot face complex vehicle driving environments. As such, there is a need for a new scheme to achieve obstacle detection with accuracy and robustness based on data captured by the ultrasonic radar.

FIG. 2 shows a schematic diagram of a system 200 utilizing a machine learning model for obstacle detection according to an example of the present invention. In the system 200, the machine learning model 208 processes input feature data 202, 204, and 208, etc., employing at least one of a classification algorithm 212 or a regression algorithm 214 to output detection information 210 for the obstacle.

The classification algorithm 212 includes, but is not limited to, a Bayesian classification algorithm, a decision tree classification algorithm, a random forest classification algorithm, a support vector machine classification algorithm, a K nearest neighbor classification algorithm, etc., or any applicable classification algorithm, particularly the classification algorithm suitable for performing multi-label classification tasks. The regression algorithm 214 includes, but is not limited to, a linear regression algorithm, a support vector machine regression algorithm, a decision tree regression algorithm, a random forest regression algorithm, an XGBoost regression algorithm, a Gaussian regression algorithm, a polynomial regression algorithm, etc., or any applicable regression algorithm, especially a regression algorithm suitable for performing a prediction frame regression task.

The input feature data includes a series of data obtained during vehicle movement. In the example shown in FIG. 2, the feature data includes ultrasonic echo data 202 captured during vehicle movement, information 204 associated with echo intersections based on the ultrasonic echo data, and optionally, may include data regarding vehicle movement 206 during the vehicle movement. Details related to the information are described below.

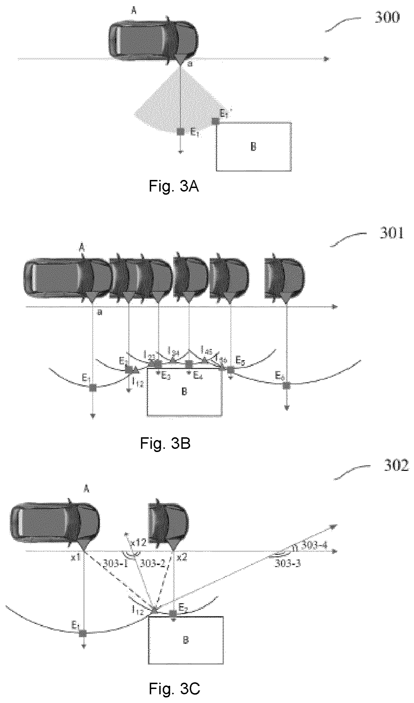

FIG. 3A shows a schematic diagram 300 of utilizing an ultrasonic radar to capture ultrasonic echo data according to an example of the present invention. In one example, as shown in FIG. 3A, the ultrasonic radar a loaded on the front right side of the vehicle A emits ultrasonic waves outward, and the ultrasonic radar a may monitor whether echoes reflected by the obstacle are received. Typically, ultrasonic wave signals are reflected by the obstacle multiple times, and thus produce multiple echoes. In one example, the quality of echo signals reflected multiple times may be poor, so the ultrasonic radar a may collect intensity information and peak information for only echo signals received at the first and second times. In other examples, more or less number of echo signals may be utilized based on signal quality, which will not be defined herein.

With reference to the description with respect to FIG. 1, according to the received echo signals, the ultrasonic radar a or other processing units of the vehicle A may calculate an echo distance as well as an echo height based on a time difference between ultrasonic wave emission and echo receiving. As shown in Figure 3A, an actual echo point is E₁', but an actual echo point location cannot be determined with distance information obtained by the ultrasonic radar alone. In one example of the present invention, the location of the echo point is determined based on the echo distance being perpendicular to a vehicle movement direction; and as shown in FIG. 3A, the location of the echo point is determined to be E₁ perpendicular to the vehicle movement direction. In another example, the location of the echo point may be determined according to the echo distance at other angles based on statistical information. In yet another example, the location of the echo point may be determined according to the echo distance based on other general rules.

FIG. 3B shows a schematic diagram 301 of utilizing ultrasonic echo data to obtain echo intersections according to an example of the present invention. **In** one example, as shown in FIG. 3B, the ultrasonic radar a loaded on the front right side of the vehicle A continuously emits ultrasonic waves outward as the vehicle A moves and continuously receives echo signals. With reference to the description for FIG. 3A, the actual echo point location cannot be determined from a single echo. On this basis, it is considered that an intersection location of two echoes may be closer to the actual echo point location, and the shape of the obstacle may be more accurately outlined by a plurality of echo intersections. FIG. 3B shows various echo points E₁₋E₆ determined based on echo distance information, and intersections I₁₂, I₂₃, I₃₄, I₄₅, I₅₆ of two echoes determined at least based on the echo distance information; and although FIG. 3B shows 6 echoes, other numbers of echoes may be utilized in other examples, which are not defined here.

Further, in order to simplify the schematic diagram, the echo intersections in the example shown in FIG. 3B are calculated based on two adjacent echoes. In another example, all actually produced echo intersections can be calculated, not limited to the adjacent echoes. In yet another example, a window size may be determined according to a computing resource to calculate echo intersections produced by all echoes within the window size. For example, the window size determined according to the computing resource is 5, i.e., the echo intersections of each echo and two echoes adjacent to each echo front and back in the vehicle driving direction are calculated.

FIG. 3C shows a schematic diagram 302 of utilizing ultrasonic echo data to obtain drift angle information for echo intersections according to an example of the present invention. With reference to the description above with respect to FIG. 3B, the echo intersection I₁₂ can be obtained based on two echo signals captured at vehicle locations x1 and x2. In addition to location information and distance information for the echo intersection, drift angle information for the echo intersection also assists in obstacle detection. In obstacle detection applicable to a vehicle, it is generally described in a two-dimensional plane by two outer corner locations of the obstacle. Accordingly, determining the drift angle information for the echo intersection helps determine a locational relationship of the vehicle to the obstacle and helps determine an outer corner location of the obstacle.

As shown in FIG. 3C, the drift angle information for the echo intersection I₁₂ may be determined as any one of 303-1to 303-4, where in one example, the x12 may be a midpoint of two vehicle locations x1 and x2; and in another example of the present invention, the x12 may also be an intersection of an angle bifurcation line of an included angle <x1-I12-x2> and the vehicle movement direction. In one example of the present invention, the drift angle of the echo intersection I₁₂ may be determined as the drift angle of a connection line of I₁₂ and x12 from the vehicle movement direction, i.e., 303-1 or 303-2. In another example of the present invention, the drift angle of the echo intersection I₁₂ may be determined as the drift angle of rays perpendicular to the connecting line of I₁₂ and x12 to the vehicle movement direction, i.e. 303-3 or 303-4. In other examples, the drift angle of the echo intersection may be determined in any suitable manner. When the locational relationship of the vehicle to the obstacle changes, the drift angle of the echo intersection also changes. Taking the drift angle 303-4 as an example, the drift angle 303-4 will gradually decrease when the vehicle travels to gradually approach the obstacle; the drift angle 303-4 will be closer to zero when the vehicle travels to be parallel to the obstacle; and the drift angle 303-4 will gradually increases again when the vehicle travels to gradually approach the obstacle.

Additionally, data regarding vehicle movement may also be obtained during the vehicle movement, including, but not limited to, location information for the vehicle, angular velocity information for the vehicle, and movement distance information for the vehicle. In one example, data points regarding vehicle movement correspond to ultrasonic echo data points captured during the vehicle movement.

Based on the description made in connection with FIG. 3A-FIG. 3C, a series of data may be obtained during the vehicle movement. The series of data may be provided as feature data to the machine learning model 208, for example, shown in FIG. 2, to output detection information 210 for the obstacle utilizing at least one of the classification algorithm 212 or the regression algorithm 214.

In these feature data, the ultrasonic echo data 202 may include, but is not limited to: location information for echo points, echo distance information, echo height information, echo signal intensity information, and echo signal peak information. In one example of the present invention, one or more of the ultrasonic echo data 202 may be determined according to the manner described in FIG. 3A.

The information 204 associated with the echo intersections may include, but is not limited to: location information for the echo intersections, distance information for the echo intersections, distance information for adjacent echo intersections, location information for the adjacent echo intersections, and drift angle information for the echo intersections. In one example of the present invention, one or more of the information 204 associated with the echo intersections may be determined according to the manner described in FIG. 3B-FIG. 3C.

Data 206 regarding vehicle movement may include, but is not limited to: location information for the vehicle, angular velocity information for the vehicle, and movement distance information for the vehicle.

It will be understood that the above data, which is detailed in connection with FIG. 3A-FIG. 3C, may be detected by respective units (e.g., ultrasonic radars, ultrasonic sensors, steering wheel rotating angle sensors, speed sensors, etc.), and various parameters may be used in any combination.

In addition, pre-processing can be performed on the above data, which may involve various calculations and operations executed on the data mentioned above. The data generated by pre-processing is then input as feature data to the machine learning model 208.

In one example of the present invention, the ultrasonic echo data 202 can be pre-processed using a down-sampling algorithm. To address the problem of disequilibrium in the classification of ultrasonic echo raw data, part of data can be selected from a majority set to be recombined with a minority set into a new data set, and such a manner is known as down-sampling. For example, commonly used down-sampling algorithms include, but are not limited to, random down sampling, EasyEnsemble, BalinceCascade, or NearMiss, etc.

In one example of the present invention, the ultrasonic echo data 202 can be pre-processed using an up-sampling algorithm. To address the problem of disequilibrium in the classification of ultrasonic echo raw data, data from a minority set can be expanded to the same number as data from a majority set, and such a manner is known as up-sampling. For example, commonly used up-sampling algorithms include, but are not limited to, interpolation, transposation convolution, up-pooling, etc.

In another example of the present invention, gridding can be employed to pre-process the ultrasonic echo data 202 and the information 204 associated with the echo intersections. The gridding processing of the data helps integrate the high-dimensional feature data for easy input into the machine learning model for processing. For example, gridding processing on 202 and 204 may be performed based, at least in part, on location information for the echo points and location information for the echo intersections included in the ultrasonic echo data 202 and the information 204 associated with the echo intersections. To ensure the accuracy and efficiency of the calculation, a compromise should be made between the particle size and the sparseness of grids. In an example, the grid size may be fixed, such as 3 cm. In another example, the grid size may be flexibly adjustable based on predetermined threshold conditions; for example, the grid size is 1 cm when computing resources are sufficient; and the grid size is 5 cm when computing resources are stretched.

In further examples of the present invention, aggregation algorithms may be employed to process the gridded ultrasonic echo data 202 and information 204 associated with the echo intersections. For example, commonly used aggregation algorithms include, but are not limited to, maximum pooling, minimum pooling, average pooling, overlapping pooling, pyramid pooling, bilinear pooling, etc. Aggregation processing can remove redundant information and further integrate feature data, thereby reducing the number of parameters and preventing overfitting.

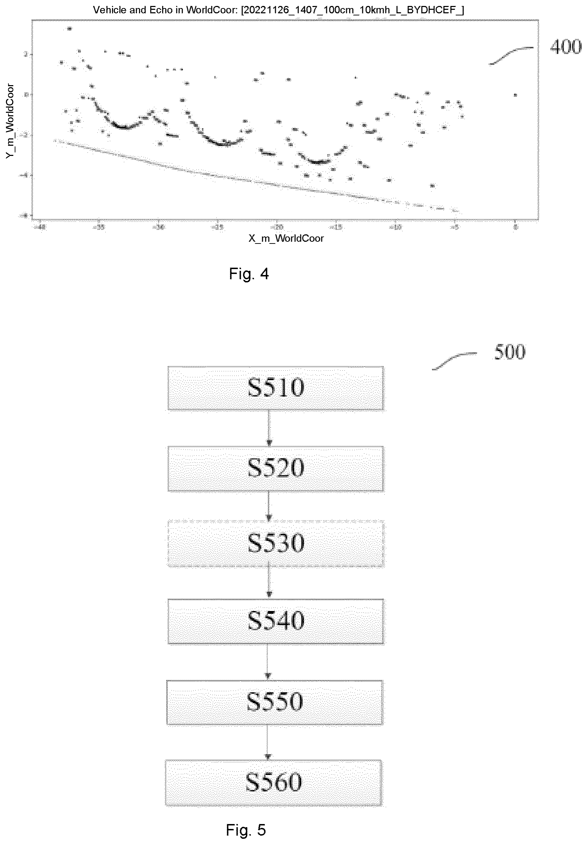

In further examples of the present invention, a two-dimensional diagram may be generated based at least on the aggregated ultrasonic echo data 202 and information 204 associated with the echo intersections, and feature data is provided to the machine learning model in the form of a two-dimensional diagram. FIG. 4 shows a two-dimensional diagram 400 according to one example of the present invention, wherein square points represent ultrasonic echo data 202, triangular points represent information 204 associated with the echo intersections, and additionally, circular points represent data 206 represent data regarding vehicle movement. It will be understood that the data of each of the points in the two-dimensional diagram is naturally a multi-dimensional array that includes, for example, contents described above in connection with FIG. 2 and FIG. 3A-FIG. 3C, respectively.

In further examples of the present invention, a sparse matrix may be generated based at least on the aggregated ultrasonic echo data 202 and information 204 associated with the echo intersections, and feature data is provided to the machine learning model in the form of the sparse matrix. It should be understood that the data of the sparse matrix is naturally a multidimensional tensor, for example, data in a single grid may have the following arrays: [X coordinate, Y coordinate, echo distance, echo height, echo signal intensity, ..., echo intersection distance,..., vehicle angular speed...], and if corresponding data items do not exist in the current grid, the item is set to zero.

The machine learning model 208 is obtained by training. The training process is based on a plurality of samples, each sample includes the ultrasonic echo data described above and information associated with echo intersections obtained based on the ultrasonic echo data, and additionally, each sample may also include data regarding vehicle movement. Further, the sample data also includes actual information for the obstacle corresponding thereto as a label. In an example, the label may be in the following array forms: [obstacle outer corner coordinate 1, obstacle outer corner coordinate 2, obstacle height, obstacle type], and in the case of multiple obstacles in one space area, there are multiple corresponding labels. The detection information for the obstacle produced by the machine model 208 shall meet certain accuracy requirements, namely: a deviation between the detection information for the obstacle and the actual information for the obstacle is less than a threshold. In one example of the present invention, a plurality of sample data (such as the ultrasonic echo data 202, the information 204 associated with the echo intersections, and, optionally, data 206 regarding vehicle movement) is input into the machine learning model 208 to be trained, the loss function is calculated based on the obstacle detection information 210 output by the machine learning model 208 and the actual information for the obstacle, and the machine learning model 208 is trained by reducing a value of the loss function until the value of the loss function converges.

In one example of the present invention, when the feature data is provided to the machine learning model in the form of the two-dimensional diagram, it may be processed using the machine learning model suitable for images, including but not limited to: a convolutional neural network (CNN) model, a regional convolutional neural network (R-CNN) model, or a YOLO model. In another example of the present invention, when the feature data is provided to the machine learning model in the form of the sparse matrix, it may be processed using the machine learning model suitable for the sparse matrix, including but not limited to: a multi-layer perception model, a pulsed neural network (SNN) model, a sparse convolutional neural network model, or a Transformer neural network model.

The machine learning model 208 shown in FIG. 2 may output detection information 210 for an obstacle. An obstacle detection task typically includes two parts, including: identifying the obstacle and locating the obstacle. In one example of the present invention, identifying the obstacle may be achieved by the classification algorithm 212. In another example of the present invention, locating the obstacle may be achieved by the regression algorithm 214. In one example of the present invention, the classification algorithm 212 and the regression algorithm 214 are executed in parallel in the machine learning model 208. For example, the detection information for the obstacle may include one or more of: a location of the obstacle, a height of the obstacle, and a type of the obstacle. In an example of the present invention, the location of the obstacle may be represented by the spatial coordinates of two outer corners thereof.

The system 200 utilizing the machine learning model to detect the obstacle shown in FIG. 2 may be configured in an autonomous driving system, an autonomous parking system, or an assisted parking system of the vehicle. The system 200 may also be configured at the roadside unit, the road monitoring camera, the parking lot infrastructure, etc. Utilizing the operational power of the machine learning model, the system overcomes the low resolution of ultrasonic radar data and the limited amount of information provided, and enables obstacle detection with accuracy and robustness while saving costs.

FIG. 5 shows a flow chart of an obstacle detection method 500 for assisting in vehicle driving according to an example of the present invention.

At step S510, a device (such as the vehicle, the roadside unit, the road monitoring camera, the parking lot infrastructure, etc.) utilizing the system 200 for detecting the obstacle by the machine learning model is configured to obtain ultrasonic echo data captured during vehicle movement.

In one example, the ultrasonic echo data includes part or all of the ultrasonic echo data 202 described above in connection with FIG. 3A-FIG. 3C, in particular, FIG. 3A. In one example, the ultrasonic echo data may be captured by a single ultrasonic sensor or ultrasonic radar. In other examples, the ultrasonic echo data may be captured by a plurality of ultrasonic sensors or ultrasonic radars. In one example, the ultrasonic echo data may be calculated based on data captured by a single ultrasonic sensor or ultrasonic radar. In other examples, the ultrasonic echo data may be calculated based on data captured by a plurality of ultrasonic sensors or ultrasonic radars.

At step S520, the device obtains the information associated with the echo intersections based on the ultrasonic echo data. In one example, the information associated with the echo intersections includes part or all of the information 204 associated with the echo intersections described above in connection with FIG. 3A-FIG. 3C, in particular FIG. 3B and FIG. 3C. In one example, the information associated with the echo intersections may be calculated by an ultrasonic radar that captures ultrasonic data. In other examples, the information associated with the echo intersections may be calculated by any unit in the device having computational capabilities.

Optionally, at step S530, the device may obtain data regarding vehicle movement during the vehicle movement. In one example, the data regarding vehicle movement includes part or all of the data 206 regarding vehicle movement described above in connection with FIG. 3A-FIG. 3C. In one example, the data regarding vehicle movement may be captured by various sensors (e.g., steering wheel rotating angle sensors, speed sensors, etc.).

At step S540, the ultrasonic echo data, the information associated with the echo intersections, and the data regarding vehicle movement (optional) may be provided as feature data to the machine learning model 208 shown in FIG. 2. Optionally, the ultrasonic echo data, the information associated with the echo intersections, and the data regarding vehicle movement (optional) may be pre-processed as described above.

At step S550, based on the feature data, the machine learning model 208 detects the obstacle employing at least one of the classification algorithm 212 or the regression algorithm 214.

At step S560, a control unit of the device assists in vehicle driving based on the detection information for the obstacle, as an example, the vehicle may plan a route or raise an alarm based on the detection information for the obstacle, as another example, the roadside unit may notify or prompt the vehicle based on the detection information for the obstacle, and as still another example, the parking lot infrastructure may identify parking spots or direct the vehicle to an empty parking spot based on the detection information for the obstacle.

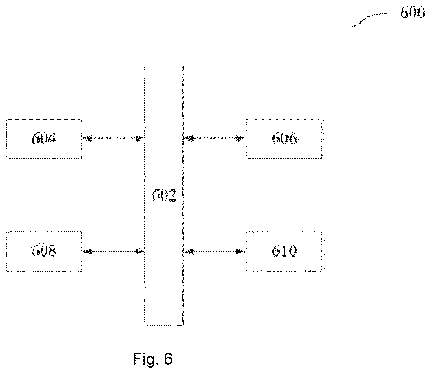

FIG. 6 shows a block diagram of an apparatus 600 that may be used for obstacle detection according to an example of the present invention. In one example of the present invention, the apparatus 600 may include a control unit or auxiliary system of a vehicle, such as an electronic control unit (ECU), an electronic management unit (EMU), a parking assistance system, an autonomous driving system, etc. In other examples, the apparatus 600 may include any unit having data processing and computing capabilities for the vehicle, the roadside unit, the road monitoring camera, the parking lot infrastructure, etc.

The example apparatus 600 includes a processor 604 connected to an internal communication bus 602, the processor 604 being used for executing instructions in a memory 606 to implement the obstacle detection method for assisting in vehicle driving described in detail above. Examples of the processor 604 may include a central processing unit (CPU), a microcontroller, etc. The memory 606, which is suitable for tangibly embodying computer program instructions and data, include various forms of memories such as EPROM, EEPROM, flash memory apparatuses, etc. The apparatus 600 may further include an input interface 608 and an output interface 610. The input interface 608 is used for receiving input signals and data, for example, data from various sensors. The output interface 610 is used for sending output signals and data, for example, various commands or alarm signals for assisting in vehicle driving.

The computer program may include instructions executable by a computer, the instructions being used for causing the processor 604 of the apparatus 600 to execute the obstacle detection method for assisting in vehicle driving. The program may be recorded on any data storage medium, including the memory. For example, the program may be implemented in digital electronic circuits or using computer hardware, firmware, software, or a combination thereof. The process/method steps described in the present disclosure can be performed by a programmable processor executing program instructions to operate on input data and generate output to perform the method steps, processes, operations.

In addition to the content described in this document, various modifications can be made to the disclosed examples and implementations of the present invention without departing from the scope of the disclosed examples and examples of the present invention. Therefore, the description and examples herein should be interpreted as illustrative and not restrictive. The scope of the present invention should only be determined by reference to the claims.

## Claims

1. An obstacle detection method for assisting in vehicle driving, comprising:
obtaining ultrasonic echo data captured during vehicle movement;
obtaining information associated with echo intersections based on the ultrasonic echo data;
providing at least part of the ultrasonic echo data and the information associated with the echo intersections as feature data to a machine learning model to obtain detection information for an obstacle, wherein the machine learning model employs at least one of a classification algorithm or a regression algorithm; and
assisting in vehicle driving based on the detection information for the obstacle.

2. **The** method according to Claim 1, further comprising:
obtaining data regarding vehicle movement during the vehicle movement, wherein the data regarding vehicle movement comprises one or more of: location information for a vehicle, angular velocity information for the vehicle, and movement distance information for the vehicle;
providing the data regarding vehicle movement as feature data to the machine learning model.

3. The method according to Claim 1, wherein the ultrasonic echo data comprises one or more of: location information for echo points, echo distance information, echo height information, echo signal intensity information, and echo signal peak information.

4. The method according to Claim 3, wherein the ultrasonic echo data is based on data captured by a single ultrasonic sensor or ultrasonic radar.

5. The method according to Claim 3, wherein the location information for the echo points is determined based at least on the echo distance information being perpendicular to a vehicle movement direction.

6. The method according to Claim 3, wherein obtaining information associated with echo intersections based on the ultrasonic echo data comprises:
calculating echo intersections between various echoes based at least on the echo distance information; and obtaining the information associated with the echo intersections based on the calculated echo intersections.

7. The method according to Claim 6, wherein the information associated with the echo intersections includes one or more of: location information for the echo intersections, distance information for the echo intersections, distance information for adjacent echo intersections, location information for the adjacent echo intersections, and drift angle information for the echo intersections.

8. The method according to Claim 1, further comprising:
processing the ultrasonic echo data employing a down-sampling or up-sampling algorithm, and providing down-sampled or up-sampled ultrasonic echo data as the feature data to the machine learning model.

9. The method according to Claim 1, further comprising:
performing gridding on the at least part of the ultrasonic echo data and the information associated with the echo intersections; and
processing the gridded ultrasonic echo data and information associated with the echo intersections employing an aggregation algorithm.

10. The method according to Claim 9, wherein the aggregation algorithm comprises maximum pooling, minimum pooling, average pooling, overlapping pooling, pyramid pooling or bilinear pooling.

11. The method according to Claim 9, further comprising:
generating a two-dimensional diagram based on the aggregated ultrasonic echo data and information associated with the echo intersections, and providing the feature data to the machine learning model in the form of the two-dimensional diagram.

12. The method according to Claim 11, wherein the machine learning model comprises: a convolutional neural network (CNN) model, a regional convolutional neural network (R-CNN) model, or a YOLO model.

13. The method according to Claim 9, further comprising:
generating a sparse matrix based on the aggregated ultrasonic echo data and information associated with the echo intersections, and providing the feature data to the machine learning model in the form of the sparse matrix.

14. The method according to Claim 13, wherein the machine learning model comprises: a multi-layer perception model, a pulsed neural network (SNN) model, a sparse convolutional neural network model, or a Transformer neural network model.

15. The method according to Claim 1, wherein the machine learning model executes both the classification algorithm and the regression algorithm in parallel.

16. The method according to Claim 1, wherein the detection information for the obstacle comprises one or more of: a location of the obstacle, a height of the obstacle, and a type of the obstacle.

17. A method for training a machine learning model for obstacle detection, comprising:
obtaining ultrasonic echo data captured during vehicle movement;
obtaining information associated with echo intersections based on the ultrasonic echo data;
providing at least part of the ultrasonic echo data and the information associated with the echo intersections as feature data to a machine learning model to obtain detection information for an obstacle, wherein the machine learning model employs at least one of a classification algorithm or a regression algorithm; and
calculating a loss function based on a difference between the detection information for the obstacle and actual information for the obstacle, and training the machine learning model by reducing a value of the loss function.

18. An obstacle detection system for assisting in vehicle driving, comprising:
a memory;
a processor coupled to the memory, the processor being configured to cause one or more units to perform the method according to any one of Claims 1-17.

19. A computer-readable medium storing a computer program comprising instructions, which, when executed by a processor, cause one or more units to perform the method according to any one of Claims 1-17.

20. A vehicle, comprising one or more units for performing the method according to any one of Claims 1-17.
